# EUROPEAN PATENT APPLICATION

(11) **EP 4 804 593 A1**
(43) Date of publication of application: **09.09.2026**
(21) Application number: 24893114.9
(22) Date of filing: 21.10.2024
(51) Int. Cl.: H04W 24/02

(54) **COMMUNICATION METHOD AND APPARATUS**

(30) Priority: 25.11.2023 CN 202311588907
(71) Applicant: Huawei Technologies Co., Ltd., Shenzhen, Guangdong 518129 (CN)
(72) Inventor: MO, Liguang, Shenzhen, Guangdong 518129 (CN); XU, Hanwen, Shenzhen, Guangdong 518129 (CN); GUO, Ziyu, Shenzhen, Guangdong 518129 (CN)
(74) Representative: Pfenning, Meinig & Partner mbB
(86) International application number: PCT/CN2024/126244
(87) International publication number: WO 2025/107955

(57) **Abstract**

This application relates to a communication method and an apparatus. In the communication method, a first node may generate a null data packet when no data is received from a terminal device in a period of time, for example, a first time period, so that the first node can send the null data packet. In other words, even if the first node has no uplink data to be reported to an upper-level node of the first node, the first node may still send the null data packet to the upper-level node of the first node, so that the upper-level node of the first node can send a data packet, for example, send the data packet to a node at an even higher level, in time without waiting for arrival of a data packet of the first node. In this way, a transmission delay can be reduced, thereby increasing time for a DU to process data, and further improving communication performance in all areas covered by a network device.

## Description

This application claims priority to Chinese Patent Application No. 202311588907.X, filed with the China National Intellectual Property Administration on November 25, 2023, and entitled "COMMUNICATION METHOD AND APPARATUS", which is incorporated herein by reference in its entirety.

### TECHNICAL FIELD

This application relates to the field of communication technologies, and in particular, to a communication method and an apparatus.

### BACKGROUND

In the 5th generation mobile communication technology (5th generation mobile networks, 5G), an architecture in which a central unit (central unit, CU), a distributed unit (distributed unit, DU), and a radio unit (radio unit, RU) are separated is proposed. In this separated architecture, a plurality of RUs may be used for networking, for example, RU cascading networking or RU aggregation networking. In this networking mode, an upper-level RU may receive a data packet from a lower-level RU, so that the upper-level RU may first decapsulate the data packet, then encapsulate decapsulated data together with data generated by the upper-level RU, and finally deliver the encapsulated data to an RU at an even higher level, a DU, or the like. In other words, in uplink transmission based on the RU cascading networking or the RU aggregation networking, a problem where the DU does not have enough time for data processing due to an excessively large transmission delay may exist. This may affect communication performance in all areas covered by a network device.

### SUMMARY

This application provides a communication method and an apparatus, to reduce a transmission delay, thereby increasing time for a DU to process data, and further improving communication performance in all areas covered by a network device.

According to a first aspect, a communication method is provided. The method may be performed by a first node, may be performed by a module (for example, a processor, a chip, or a chip system) used in the first node, or may be implemented by a logical node, a logical module, or software that can implement all or some functions of the first node. In the communication method, a first data packet may be generated when no data from a terminal device is received in a first time period, where the first data packet is a null data packet, and an end moment of the first time period is earlier than a latest moment at which the first node reports an uplink data packet. Therefore, the first data packet may be sent.

It can be learned that, in the foregoing embodiment, the first node may generate the null data packet when no data from the terminal device is received in a period of time, for example, the first time period, so that the first node can send the null data packet. In other words, even if the first node has no uplink data to be reported to an upper-level node of the first node, the first node may still send the null data packet to the upper-level node of the first node, so that the upper-level node of the first node can send a data packet, for example, send the data packet to a node at an even higher level, in time without waiting for arrival of a data packet of the first node. In this way, a transmission delay can be reduced, thereby increasing time for a DU to process data, and further improving communication performance in all areas covered by a network device.

According to a second aspect, a communication method is provided. The method may be performed by a second node, may be performed by a module (for example, a processor, a chip, or a chip system) used in the second node, or may be implemented by a logical node, a logical module, or software that can implement all or some functions of the second node. In the communication method, a first data packet may be received at a first moment. The first moment is earlier than a maximum moment till which the second node waits for arrival of a data packet of a first node, the first data packet is a null data packet, and the second node is an upper-level node of the first node. In this way, a second data packet may be sent at a second moment. The second moment is later than the first moment, and the second moment is earlier than the maximum moment till which the second node waits for arrival of the data packet of the first node.

It can be learned that, in the foregoing embodiment, the upper-level node of the first node, for example, the second node, may receive the null data packet at the first moment, and therefore may send the second data packet at the second moment. The first moment is earlier than the maximum moment till which the second node waits for arrival of the data packet of the first node, the second moment is later than the first moment, and the second moment is earlier than the maximum moment till which the second node waits for arrival of the data packet of the first node. In other words, without waiting for arrival of the data packet of the first node, the second node may send the data packet in time, for example, send the data packet to a node at an even higher level. In this way, a transmission delay can be reduced, thereby increasing time for a DU to process data, and further improving communication performance in all areas covered by a network device.

According to a third aspect, a communication method is provided. The method may be performed by a first node, may be performed by a module (for example, a processor, a chip, or a chip system) used in the first node, or may be implemented by a logical node, a logical module, or software that can implement all or some functions of the first node. In the communication method, it may be determined that there is no to-be-sent uplink data, so that first indication information may be sent. The first indication information indicates that the first node is in an idle state, the first indication information is used to determine second indication information, the second indication information indicates a second node not to wait for a data packet of the first node, and the first node is a lower-level node of the second node.

It can be learned that, in the foregoing embodiment, the first node may send the first indication information when there is no to-be-sent uplink data, so that the DU may learn, based on the first indication information, that the first node is in the idle state, and may further send the second indication information to an upper-level node of the first node, for example, the second node, and the second node may learn not to wait for the data packet of the first node. In this way, without waiting for arrival of the data packet of the first node, the second node may send the data packet in time, for example, send the data packet to a node at an even higher level. In this way, a transmission delay can be reduced, thereby increasing time for a DU to process data, and further improving communication performance in all areas covered by a network device.

With reference to the third aspect, optionally, that the first node determines that there is no to-be-sent uplink data includes: The first node determines, when a first condition is met, that there is no to-be-sent uplink data, where the first condition includes that no data from a terminal device is detected in a first time period.

According to a fourth aspect, a communication method is provided. The method may be performed by a DU, may be performed by a module (for example, a processor, a chip, or a chip system) used in the DU, or may be implemented by a logical node, a logical module, or software that can implement all or some functions of the DU. In the communication method, first indication information may be received, and the first indication information indicates that a first node is in an idle state. Therefore, second indication information may be sent based on the first indication information, where the second indication information indicates a second node not to wait for a data packet of the first node, and the second node is an upper-level node of the first node.

It can be learned that, in the foregoing embodiment, the DU may learn, based on the first indication information, that the first node is in the idle state, and may further send the second indication information to the upper-level node of the first node, for example, the second node, so that the second node may learn not to wait for the data packet of the first node. In this way, without waiting for arrival of the data packet of the first node, the second node may send the first data packet in time, for example, send the first data packet to a node at an even higher level. In this way, a transmission delay can be reduced, thereby increasing time for the DU to process data, and further improving communication performance in all areas covered by a network device.

With reference to the fourth aspect, optionally, that the second indication information is sent based on the first indication information includes: The second indication information is sent based on topology information and the first indication information, where the topology information includes a connection relationship between a plurality of nodes, and the plurality of nodes include the first node and the second node.

It can be learned that in the foregoing embodiment, the DU may accurately learn of the upper-level node of the first node, for example, the second node, based on the topology information and the first indication information, and may further send the second indication information to the second node, so that the second node may learn not to wait for the data packet of the first node. In this way, without waiting for arrival of the data packet of the first node, the second node may send the first data packet in time, for example, send the first data packet to the node at the even higher level. In this way, a transmission delay can be reduced, thereby increasing time for the DU to process data, and further improving communication performance in all areas covered by a network device.

According to a fifth aspect, a communication method is provided. The method may be performed by a second node, may be performed by a module (for example, a processor, a chip, or a chip system) used in the second node, or may be implemented by a logical node, a logical module, or software that can implement all or some functions of the second node. In the communication method, second indication information may be received, where the second indication information indicates the second node not to wait for a data packet of a first node, and the second node is an upper-level node of the first node. Therefore, a first data packet may be sent at a first moment, where the first moment is earlier than a maximum moment till which the second node waits for arrival of the data packet of the first node.

It can be learned that in the foregoing embodiment, after learning, based on the second indication information, not to wait for the data packet of the first node, the second node may send the data packet at the first moment. The first moment is earlier than the maximum moment till which the second node waits for arrival of the data packet of the first node. In other words, without waiting for arrival of the data packet of the first node, the second node may send the first data packet in time, for example, send the first data packet to a node at an even higher level. In this way, a transmission delay can be reduced, thereby increasing time for a DU to process data, and further improving communication performance in all areas covered by a network device.

According to a sixth aspect, a communication method is provided. The method may be performed by a first node, may be performed by a module (for example, a processor, a chip, or a chip system) used in the first node, or may be implemented by a logical node, a logical module, or software that can implement all or some functions of the first node. In the communication method, first indication information may be sent, where the first indication information indicates that a maximum moment till which the first node waits for arrival of a data packet of a second node is earlier than an arrival moment of the data packet of the second node, and the first node is an upper-level node of the second node. The first indication information is used to determine second indication information, and the second indication information indicates the first node not to wait for the data packet of the second node. Therefore, the second indication information may be received. Therefore, a first data packet may be sent at a first moment, where the first moment is earlier than the maximum moment till which the first node waits for arrival of the data packet of the second node.

It can be learned that in the foregoing embodiment, the first node may send the first indication information, so that a DU learns, based on the first indication information, that the maximum moment till which the first node waits for arrival of the data packet of the second node is earlier than the arrival moment of the data packet of the second node, and sends the second indication information based on the first indication information, so that the first node learns, based on the second indication information, not to wait for the data packet of the second node. Therefore, the first node may send the first data packet in time, for example, send the first data packet to a node at an even higher level. In this way, a transmission delay can be reduced, thereby increasing time for a DU to process data, and further improving communication performance in all areas covered by a network device.

With reference to the sixth aspect, optionally, the method further includes: Third indication information is sent, where the third indication information indicates that the maximum moment till which the first node waits for arrival of the data packet of the second node is later than the arrival moment of the data packet of the second node, the third indication information is used to determine fourth indication information, and the fourth indication information indicates the first node to wait for the data packet of the second node. The fourth indication information is received.

It can be learned that, in the foregoing embodiment, the first node may send the third indication information, so that the DU learns, based on the third indication information, that the maximum moment till which the first node waits for arrival of the data packet of the second node is later than the arrival moment of the data packet of the second node, and sends the fourth indication information based on the third indication information, so that the first node learns, based on the fourth indication information, to wait for the data packet of the second node. In other words, when the first node learns that the maximum moment till which the first node waits for arrival of the data packet of the second node is later than the arrival moment of the data packet of the second node, the first node may wait for the data packet of the second node again, thereby reducing a data loss, and improving transmission reliability.

According to a seventh aspect, a communication method is provided. The method may be performed by a DU, may be performed by a module (for example, a processor, a chip, or a chip system) used in the DU, or may be implemented by a logical node, a logical module, or software that can implement all or some functions of the DU. In the communication method, first indication information may be received, where the first indication information indicates that a maximum moment till which the first node waits for arrival of a data packet of a second node is earlier than an arrival moment of the data packet of the second node, and the first node is an upper-level node of the second node. Therefore, second indication information may be sent based on the first indication information, where the second indication information indicates the first node not to wait for the data packet of the second node.

It can be learned that in the foregoing embodiment, the DU may receive the first indication information, so that the DU learns, based on the first indication information, that the maximum moment till which the first node waits for arrival of the data packet of the second node is earlier than the arrival moment of the data packet of the second node, and sends the second indication information based on the first indication information, so that the first node learns, based on the second indication information, not to wait for the data packet of the second node. Therefore, the first node may send the first data packet in time, for example, send the first data packet to a node at an even higher level. In this way, a transmission delay can be reduced, thereby increasing time for a DU to process data, and further improving communication performance in all areas covered by a network device.

With reference to the seventh aspect, optionally, the method further includes: Fifth indication information is received, where the fifth indication information indicates that a maximum moment till which a third node waits for arrival of a data packet of a fourth node is earlier than an arrival moment of the data packet of the fourth node, and the third node is an upper-level node of the fourth node. That the second indication information is sent based on the first indication information includes: The second indication information is sent based on topology information, the first indication information, and the fifth indication information. The topology information indicates a connection relationship between a plurality of nodes, and the plurality of nodes include the first node, the second node, the third node, and the fourth node.

It can be learned that, in the foregoing embodiment, the DU may further receive the fifth indication information, so that the DU learns, based on the fifth indication information, that the maximum moment till which the third node waits for arrival of the data packet of the fourth node is earlier than an arrival moment of the data packet of the fourth node. Therefore, the DU may send the second indication information based on the topology information, the first indication information, and the fifth indication information. In this way, the DU may learn of a node that has a transmission problem and that is at a lowest level on a link on which the first node, the second node, the third node, and the fourth node are located, and further send the second indication information to an upper-level node of the node, for example, the first node, so that the first node learns, based on the second indication information, not to wait for the data packet of the second node. Therefore, the first node may send a data packet to a node at an even higher level in time. In this way, a transmission delay can be reduced, thereby increasing time for a DU to process data, and further improving communication performance in all areas covered by a network device.

With reference to the seventh aspect, optionally, the method further includes: Third indication information is received, where the third indication information indicates that the maximum moment till which the first node waits for arrival of the data packet of the second node is later than the arrival moment of the data packet of the second node. Fourth indication information is sent based on the third indication information, where the fourth indication information indicates the first node to wait for the data packet of the second node.

It can be learned that, in the foregoing embodiment, the DU may receive the third indication information, so that the DU learns, based on the third indication information, that the maximum moment till which the first node waits for arrival of the data packet of the second node is later than the arrival moment of the data packet of the second node, and sends the fourth indication information based on the third indication information, so that the first node learns, based on the fourth indication information, to wait for the data packet of the second node. In other words, when the first node learns that the maximum moment till which the first node waits for arrival of the data packet of the second node is later than the arrival moment of the data packet of the second node, the first node may wait for the data packet of the second node again, thereby reducing a data loss, and improving transmission reliability.

With reference to the seventh aspect, optionally, the method further includes: Sixth indication information is sent. The sixth indication information indicates that there is an exception in data transmission of the second node, or the sixth indication information indicates that there is an exception in data transmission in an area covered by a first cell. The area covered by the first cell includes an area covered by the second node.

According to an eighth aspect, a communication apparatus is provided. The communication apparatus includes a unit or module configured to implement the method according to any one of the implementations of any one of the first aspect to the seventh aspect.

According to a ninth aspect, a communication apparatus is provided. The communication apparatus includes at least one processor. The at least one processor is configured to perform the method according to any one of the implementations of any one of the first aspect to the seventh aspect. The at least one processor may execute a computer program or instructions in a memory, so that the foregoing method is performed. The memory may be included in the communication apparatus, or may be located outside the communication apparatus. In addition, the communication apparatus may further include an interface.

According to a tenth aspect, a computer-readable storage medium is provided. The computer-readable storage medium stores computer instructions. When the computer instructions are executed, a computer is enabled to perform the method according to any one of the implementations of the first aspect to the seventh aspect.

According to an eleventh aspect, a computer program product is provided. The computer program product includes computer program code. When the computer program code is run on a computer, the computer is enabled to perform the method according to any one of the implementations of any one of the first aspect to the seventh aspect.

According to a twelfth aspect, a chip is provided. The chip includes at least one processor and an interface. The processor is configured to read and execute instructions stored in a memory. When the instructions are run, the chip is enabled to perform the method according to any one of the implementations of any one of the first aspect to the seventh aspect.

### BRIEF DESCRIPTION OF DRAWINGS

FIG. 1 shows a basic architecture of a communication system according to an embodiment of this application;
FIG. 2 is a diagram of RU cascading networking;
FIG. 3 is a diagram of RU aggregation networking;
FIG. 4 is a schematic flowchart of a communication method according to an embodiment of this application;
FIG. 5 is a schematic flowchart of another communication method according to an embodiment of this application;
FIG. 6 is a schematic flowchart of still another communication method according to an embodiment of this application;
FIG. 7 is a diagram of determining a faulty node in RU cascading networking according to an embodiment of this application;
FIG. 8 is a diagram of determining a faulty node in RU aggregation networking according to an embodiment of this application;
FIG. 9 is a diagram of a structure of a communication apparatus according to an embodiment of this application; and
FIG. 10 is a diagram of a structure of another communication apparatus according to an embodiment of this application.

### DESCRIPTION OF EMBODIMENTS

The following describes the technical solutions in embodiments of this application with reference to the accompanying drawings in embodiments of this application. The terms "system" and "network" may be used interchangeably in embodiments of this application. "/" represents an "or" relationship between associated objects unless otherwise specified. For example, A/B may represent A or B. The term "and/or" in this application is merely an association relationship for describing associated objects, and represents that three relationships may exist. For example, A and/or B may represent the following three cases: Only A exists, both A and B exist, and only B exists, where A and B each may be singular or plural. In addition, in the descriptions of this application, "a plurality of" means two or more than two unless otherwise specified. "At least one of the following items (pieces)" or a similar expression thereof indicates any combination of these items, including a single item (piece) or any combination of a plurality of items (pieces). For example, at least one item (piece) of a, b, or c may indicate: a, b, c, a and b, a and c, b and c, or a, b, and c, where a, b, and c may be singular or plural. In addition, to clearly describe the technical solutions in embodiments of this application, the terms such as "first" and "second" are used in embodiments of this application to distinguish between same items or similar items that provide basically same network elements and purposes. A person skilled in the art may understand that the terms such as "first" and "second" do not limit a quantity or an execution sequence, and the terms such as "first" and "second" do not indicate a definite difference.

Reference to "an embodiment", "some embodiments", or the like described in embodiments of this application means that one or more embodiments of this application include a specific feature, structure, or characteristic described with reference to the embodiments. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "comprise", "have", and their variants all mean "include but are not limited to", unless otherwise specifically emphasized in another manner.

The objectives, technical solutions, and beneficial effects of this application are further described in detail in the following specific implementations. It should be understood that the following descriptions are merely specific implementations of this application, but are not intended to limit the protection scope of this application. Any modification, equivalent replacement, improvement, or the like made based on the technical solutions of this application shall fall within the protection scope of this application.

In embodiments of this application, unless otherwise stated or there is a logic conflict, terms and/or descriptions in different embodiments are consistent and may be mutually referenced, and technical features in different embodiments may be combined into a new embodiment based on an internal logical relationship thereof.

It should be understood that the technical solutions in embodiments of this application may be applied to a 5th generation (5th generation mobile network, 5G) mobile communication technology and the like. The technical solutions in embodiments of this application may be further applied to another future communication system, for example, a 6G communication system. In the future communication system, same functions may be maintained, but a name may be changed.

The following describes a basic architecture of a communication system according to embodiments of this application. The communication system provided in this application may include one or more network devices and one or more terminal devices.

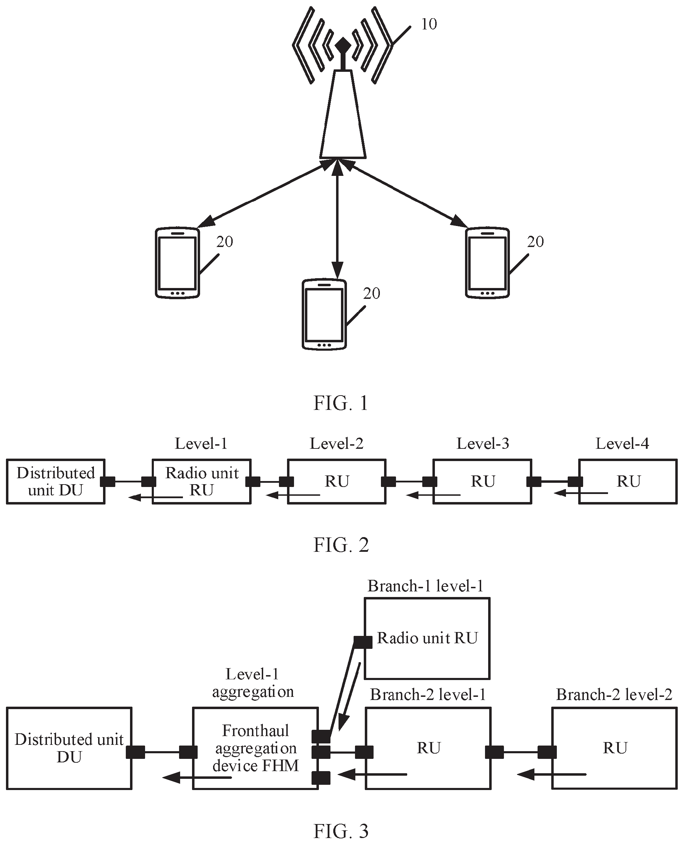

The following uses a system architecture shown in FIG. 1 as an example for description. As shown in FIG. 1, the communication system includes a network device 10 and one or more terminal devices (for example, terminal devices 20 in FIG. 1) communicating with the network device 10. It should be noted that quantities of network devices and terminal devices in FIG. 1 are merely examples, and should not be considered as a specific limitation on this application. The following describes in detail devices involved in the system architecture.

### I. Terminal device

The terminal device is an entity that is on a user side and that is configured to receive a signal, or send a signal, or receive a signal and send a signal. The terminal device is configured to provide one or more of a voice service and a data connectivity service for a user. The terminal device may be a device that has a wireless transceiver function and that may cooperate with a network device to provide a communication service for the user. Specifically, the terminal device may be user equipment (user equipment, UE), an access terminal, a subscriber unit, a subscriber station, a mobile station, a remote station, a remote terminal, a mobile device, a terminal, a wireless communication device, a user agent, a user apparatus, or a road side unit (road side unit, RSU). The terminal device may alternatively be an uncrewed aerial vehicle, an internet of things (internet of things, IoT) device, a station (station, ST) in a wireless local area network (wireless local area network, WLAN), a cellular phone (cellular phone), a smartphone (smartphone), a cordless phone, a wireless data card, a tablet computer, a session initiation protocol (session initiation protocol, SIP) phone, a wireless local loop (wireless local loop, WLL) station, a personal digital assistant (personal digital assistant, PDA) device, a laptop computer (laptop computer), a machine-type communication (machine-type communication, MTC) terminal, a handheld device with a wireless communication function, a compute device or another processing device connected to a wireless modem, a vehicle-mounted device, a wearable device (also referred to as a wearable smart device), a virtual reality (virtual reality, VR) terminal, an augmented reality (augmented reality, AR) terminal, a wireless terminal in telemedicine (remote medical), a wireless terminal in industrial control (industrial control), a wireless terminal in self-driving (self-driving), a wireless terminal in a smart grid (smart grid), a wireless terminal in transportation safety (transportation safety), a wireless terminal in a smart city (smart city), a wireless terminal in a smart home (smart home), or the like. The terminal device may alternatively be a terminal in a 5G system, or a terminal in a next-generation communication system. This is not limited in embodiments of this application.

A device form of the terminal device is not limited in embodiments of this application. An apparatus for implementing a function of the terminal device may be a terminal device, or may be an apparatus, for example, a chip system, that can support the terminal device in implementing the function. The apparatus may be mounted in the terminal device or used in a manner of matching the terminal device. In embodiments of this application, the chip system may include a chip, or may include a chip and another discrete component.

### II. Network device

The network device is an entity that is on a network side and that is configured to send a signal, receive a signal, or send a signal and receive a signal. The network device may be an apparatus deployed in a radio access network (radio access network, RAN) to provide a wireless communication function for a terminal device.

In a possible scenario, a plurality of network devices collaborate to assist a terminal device in implementing wireless access, and different network devices separately implement a part of functions of a base station. For example, the network device may include a central unit (central unit, CU), a distributed unit (distributed unit, DU), a CU-control plane (control plane, CP), a CU-user plane (user plane, UP), a radio unit (radio unit, RU), or the like. The CU and the DU may be separately arranged, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH). It may be understood that the network device may be a CU node, a DU node, or a device including a CU node and a DU node. In addition, the CU may be classified as a network device in an access network RAN, or the CU may be classified as a network device in a core network CN. This is not limited herein.

In different systems, the CU (or the CU-CP and the CU-UP), the DU, or the RU may also have different names, but a person skilled in the art may understand meanings thereof. For example, in an open access radio access network (open RAN, O-RAN or ORAN) system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any one of the CU (or the CU-CP and the CU-UP), the DU, and the RU in this application may be implemented by using a software module, a hardware module, or a combination of a software module and a hardware module.

A form of the network device is not limited in embodiments of this application. An apparatus for implementing a function of the network device may be a network device, or may be an apparatus, for example, a chip system, that can support the network device in implementing the function. The apparatus may be mounted in the network device or used in a manner of matching with the network device.

To facilitate understanding of content of this solution, the following further explains and describes some terms in embodiments of this application, to facilitate understanding by a person skilled in the art. This part is merely for ease of understanding, and cannot be considered as a specific limitation on this application.

### 1. Data packet

The data packet may be a service operation, administration, and maintenance (operation, administration, and maintenance, OAM) data packet. It may be understood that the data packet is a management plane data packet. Alternatively, the data packet may be a data packet in a radio bearer (radio bearer, RB). For example, the RB may be a data radio bearer (data radio bearer, DRB), and it may be understood that the data packet is a user plane data packet; or the RB may be a signaling radio bearer (signaling radio bearer, SRB), and it may be understood that the data packet is a control plane data packet.

Generally, the data packet may carry identification information. For example, a packet header of the data packet may carry the identification information. The identification information identifies a type of the data packet. In other words, it may be learned, based on the identification information, whether the data packet is a management plane data packet, a user plane data packet, a control plane data packet, or the like. A specific distinguishing manner is not limited.

The identification information may be one or more of a cell identifier, an identifier of a time unit, or the like. The cell identifier may be one or more of a cell global identifier (cell global identifier, CGI), a physical cell identifier (physical cell identifier, PCI) of a candidate cell, or the like. The time unit may be one or more of a frame, a subframe, a slot, a symbol, or the like. Optionally, the identifier of the time unit may alternatively be described as a time unit index, a time unit number, or the like. This is not limited herein.

### 2. Multi-RU distributed cell

For the multi-RU distributed cell, signals of the cell cover a plurality of areas by using a plurality of RUs. One RU may cover at least one area.

Generally, the plurality of RUs may cover the plurality of areas through RU cascading networking or RU aggregation networking.

In the RU cascading networking, a DU and at least one RU may be included. There is an upper-level and lower-level relationship between the at least one RU. As shown in FIG. 2, a level-1 RU is an upper-level node of a level-2 RU, the level-2 RU is an upper-level node of a level-3 RU, and the level-3 RU is an upper-level node of a level-4 RU. In other words, the level-2 RU is a lower-level node of the level-1 RU, the level-3 RU is a lower-level node of the level-2 RU, and the level-4 RU is a lower-level node of the level-3 RU. A description manner is not limited in this application.

In the RU aggregation networking, a DU, at least one RU, and at least one fronthaul aggregation device may be included. The fronthaul aggregation device in this application may be a fronthaul aggregation multiplexer (fronthaul multiplexer, FHM), or may be another module that has a function of aggregating a plurality of fronthaul signals. It may be understood that, in this application, the FHM is used for description, but a specific module name of the fronthaul aggregation device is not limited.

Optionally, there may be an upper-level and lower-level relationship between at least one of the at least one RU, at least one FHM, and the like. As shown in FIG. 3, a level-1 aggregation FHM is an upper-level node of a branch-1 level-1 RU and a branch-2 level-1 RU, and the branch-2 level-1 RU is an upper-level node of a branch-2 level-2 RU. In other words, the branch-1 level-1 RU and the branch-2 level-1 RU are lower-level nodes of the level-1 aggregation FHM, and the branch-2 level-2 RU is a lower-level node of the branch-2 level-1 RU. A description manner is not limited in this application. Optionally, the at least one RU may include RUs at a same level, or the at least one RU may not include RUs at a same level. The RUs at the same level do not directly communicate with each other. As shown in FIG. 3, the branch-1 level-1 RU and the branch-2 level-1 RU may be RUs at a same level. Optionally, the at least one FHM may include FHMs at a same level, or the at least one FHM may not include FHMs at a same level. The FHMs at the same level do not directly communicate with each other.

It should be understood that in the RU cascading networking or the RU aggregation networking, uplink transmission and/or downlink transmission may be performed. This solution mainly describes an uplink transmission scenario. With reference to FIG. 2 and FIG. 3, the following separately describes uplink transmission scenarios of RU cascading networking and RU aggregation networking. In FIG. 2 and FIG. 3, an arrow direction is an uplink transmission direction.

Generally, when a data packet is a management plane data packet, in the RU cascading networking or the RU aggregation networking, an RU or an FHM is used for transparent transmission. For example, in FIG. 2, the level-4 RU may send a data packet to the level-3 RU, and the data packet is a management plane data packet. After receiving the data packet from the level-4 RU, the level-3 RU may deliver the data packet to the level-2 RU. After receiving the data packet from the level-3 RU, the level-2 RU may deliver the data packet to the level-1 RU. After receiving the data packet from the level-2 RU, the level-1 RU may deliver the data packet to the DU. For another example, in FIG. 3, the branch-1 level-1 RU may send a data packet to the level-1 aggregation FHM, and the data packet is a management plane data packet. After receiving the data packet from the branch-1 level-1 RU, the level-1 aggregation FHM may deliver the data packet to the DU.

When the data packet is a user plane data packet or a control plane data packet, in the RU cascading networking or the RU aggregation networking, the RU or the FHM may have a data processing function and/or a data transmission function. In this case, after receiving a data packet from a lower-level RU, an upper-level RU may decapsulate the data packet, encapsulate decapsulated data together with data generated by the upper-level RU, and finally deliver the encapsulated data to an RU at an even higher level, an FHM, or a DU. In addition, in the RU aggregation networking, after receiving a data packet from a lower-level RU or FHM, an upper-level FHM may decapsulate the data packet, encapsulate decapsulated data together with data generated by the upper-level FHM, and finally deliver the encapsulated data to an FHM at an even higher level or a DU. In other words, for the former, the upper-level RU needs to wait for the data packet of the lower-level RU; and for the latter, the upper-level FHM needs to wait for the data packet of the lower-level RU or FHM. For ease of description, the upper-level RU may be referred to as an upper-level node, and the lower-level RU may be referred to as a lower-level node; or the upper-level FHM is referred to as an upper-level node, and the lower-level RU or FHM is referred to as a lower-level node. Time in which the upper-level node waits for a data packet of the lower-level node may be referred to as maximum waiting time. For example, at an end moment (which may also be described as a maximum moment till which an upper-level node waits for arrival of a data packet of a lower-level node) of the maximum waiting time, if the upper-level node receives no data packet of the lower-level node, the upper-level node gives up continuing waiting for the data packet of the lower-level node, and delivers data generated by the upper-level node to a node at an even higher level.

It should be noted that maximum waiting time may be set for at least one of the following: any RU in the RU cascading networking, any RU or FHM in the RU aggregation networking, or the like. Optionally, maximum waiting time may not be set for a lowest-level RU in the RU cascading networking. Similarly, maximum waiting time may not be set for a lowest-level RU on any link in the RU aggregation networking. The link herein refers to a link between the DU and the lowest-level RU. As shown in FIG. 3, there may be a link from the DU to the level-1 aggregation FHM and to the branch-1 level-1 RU, where a lowest-level RU is the branch-1 level-1 RU. There may be a link from the DU to the level-1 aggregation FHM to the branch-2 level-1 RU and to the branch-2 level-2 RU, where a lowest-level RU is the branch-2 level-2 RU.

Optionally, in the RU cascading networking, maximum waiting time of different RUs may be the same or different. In the RU aggregation networking, maximum waiting time of different RUs may be the same or different, and maximum waiting time of different FHMs may be the same or different. Optionally, in the RU aggregation networking, maximum waiting time of the RU may be the same as or different from that of the FHM. This is not limited herein.

The following describes embodiments of this application in detail. Specifically, a terminal device in the following may be the terminal device in FIG. 1, and a node in the following may be the RU or the DU in FIG. 1, FIG. 2, and FIG. 3, the FHM in FIG. 3, or the like. It should be noted that names of messages, names of parameters in the messages, or the like in the following embodiments are merely examples, and there may be other names in specific implementation. This is not specifically limited in embodiments of this application. In addition, in the following embodiments, all unexplained data packets may be understood as data packets in an RB.

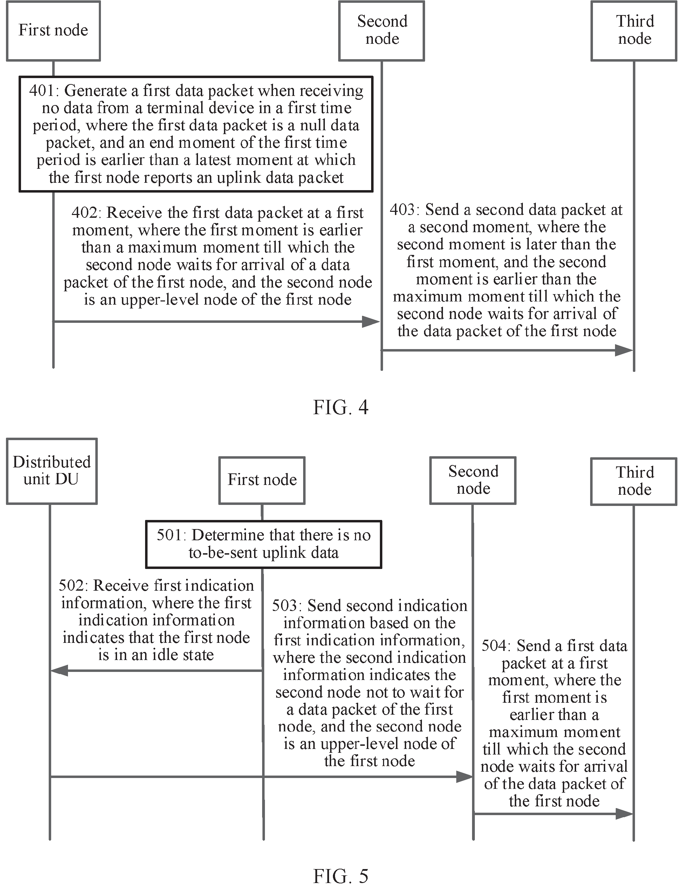

FIG. 4 shows a communication method according to an embodiment of this application, and the communication method includes but is not limited to the following steps.

401: A first node generates a first data packet when no data is received from a terminal device in a first time period, where the first data packet is a null data packet, and an end moment of the first time period is earlier than a latest moment at which the first node reports an uplink data packet.

Optionally, the first time period is a predefined or (pre)configured time period. For example, the first time period is indicated by a DU to the first node. Optionally, duration of the first time period may be greater than 0, for example, 500 milliseconds (ms). The duration of the first time period is not limited in this application.

The data of the terminal device in step 401 may include user plane data and/or control plane data. Optionally, that no data from the terminal device is received in the first time period may be understood as one of the following:
1. No data from the terminal device is detected in all of a plurality of first time periods. For example, the first time period is 500 ms. No data from the terminal device is detected in 1^{st} 500 ms, no data from the terminal device is detected in 2^{nd} 500 ms, and no data from the terminal device is detected in 3^{rd} 500 ms. In this case, it may be considered that no data from the terminal device is detected in the first time period.

Optionally, there is an association relationship between the plurality of first time periods. For example, after one first time period ends, another time period may start. In other words, an end moment of the one first time period is earlier than a start moment of the another time period.

2. A quantity of first time periods in which no data is detected in a plurality of first time periods is greater than a quantity of first time periods in which data is detected in the plurality of first time periods. For example, it is assumed that there are 10 first time periods in total, no data from the terminal device is detected in eight first time periods, and data from the terminal device is detected in two first time periods. In this case, it may be considered that no data from the terminal device is detected in the first time period.

Optionally, the manner 2 may also be understood as: A ratio of the quantity of first time periods in which no data is detected in the plurality of first time periods to the quantity of first time periods in which data is detected in the plurality of first time periods is greater than or equal to a first ratio, or a ratio of the quantity of first time periods in which no data is detected in the plurality of first time periods to a total quantity of first time periods is greater than or equal to a second ratio. Certainly, there may be another description manner, which is not limited herein.

It should be noted that a specific ratio (for example, the first ratio or the second ratio) mentioned in this application may be a predefined or preconfigured value. For example, the ratio is indicated by the DU to the first node. A value of the ratio is not limited in this application.

In a possible implementation, the first time period may be less than a maximum time period in which the first node waits for arrival of a data packet of a third node. The third node is a lower-level node of the first node. In other words, when a lower-level node (for example, the third node) of the first node further exists on a link on which the first node is located, the first time period may be less than the maximum time period in which the first node waits for arrival of the data packet of the third node. In this case, a latest moment at which the first node reports an uplink data packet is earlier than or equal to a maximum moment till which the first node waits for arrival of the data packet of the third node.

Optionally, a payload (payload) of the first data packet has a length of 0, or the payload is null. In other words, the first data packet does not include uplink user plane data and/or uplink control plane data.

Optionally, the first data packet may further carry identification information. For example, a packet header of the first data packet may carry the identification information. For the identification information, refer to the foregoing related descriptions. Details are not described herein again.

402: A second node receives the first data packet at a first moment. The first moment is earlier than a maximum moment till which the second node waits for arrival of a data packet of the first node, and the second node is an upper-level node of the first node.

Correspondingly, the first node sends the first data packet.

Optionally, that the second node receives the first data packet at the first moment may include: The second node receives the first data packet from the first node at the first moment. In other words, the first node sends the first data packet to the second node.

403: The second node sends a second data packet at a second moment. The second moment is later than the first moment, and the second moment is earlier than the maximum moment till which the second node waits for arrival of the data packet of the first node.

Correspondingly, the third node receives the second data packet. In a possible implementation, the third node is an upper-level node of the second node. For example, the third node is an RU, the second node is an RU, and the first node is an RU; the third node is an FHM, the second node is an RU, and the first node is an RU; or the third node is an FHM, the second node is an FHM, and the first node is an RU. In this case, the third node may decapsulate the second data packet, encapsulate decapsulated data together with data generated by the third node, and finally deliver the encapsulated data to an RU at an even higher level, an FHM, or a DU. In another possible implementation, the third node is a DU, the second node is an RU, and the first node is an RU; the third node is a DU, the second node is an FHM, and the first node is an RU; or the third node is a DU, the second node is an FHM, and the first node is an FHM. In this case, the third node may decapsulate the second data packet.

The foregoing merely provides some examples of the third node, the second node, and the first node, and there is another combination manner. This is not limited herein.

Optionally, step 403 may include: The second node sends the second data packet to the third node at the second moment. In other words, the third node receives the second data packet from the second node.

Optionally, that the second moment is earlier than the maximum moment till which the second node waits for arrival of the data packet of the first node may also be described as: The second moment is earlier than an end moment of maximum waiting time of the second node. The maximum waiting time of the second node is maximum time in which the second node waits for arrival of the data packet of the first node. A description manner is not limited in this application.

It can be learned that in the foregoing embodiment, even if the first node has no uplink data to be reported to an upper-level node of the first node, the first node may still send the null data packet to the upper-level node of the first node, so that the upper-level node of the first node can send a data packet to a node at an even higher level in time without waiting for arrival of the data packet of the first node. In this way, a transmission delay can be reduced, thereby increasing time for the DU to process data, and further improving communication performance in all areas covered by a network device.

FIG. 5 shows another communication method according to an embodiment of this application. The communication method includes but is not limited to the following steps:
501: A first node determines that there is no to-be-sent uplink data.

The uplink data may include uplink user plane data and/or uplink control plane data.

Optionally, that the first node determines that there is no to-be-sent uplink data includes: The first node determines, when a first condition is met, that there is no to-be-sent uplink data, where the first condition includes that no data from a terminal device is detected in a first time period.

Optionally, the first time period is a predefined or (pre)configured time period. For example, the first time period is indicated by a DU to the first node. Optionally, duration of the first time period may be greater than 0, for example, 500 milliseconds (ms). The duration of the first time period is not limited in this application.

Optionally, that no data from the terminal device is detected in the first time period may be understood as one of the following:

1. No data from the terminal device is detected in all of a plurality of first time periods. For example, the first time period is 500 ms. No data from the terminal device is detected in 1^{st} 500 ms, no data from the terminal device is detected in 2^{nd} 500 ms, and no data from the terminal device is detected in 3^{rd} 500 ms. In this case, it may be considered that no data from the terminal device is detected in the first time period.

Optionally, there is an association relationship between the plurality of first time periods. For example, after one first time period ends, another time period may start. In other words, an end moment of the one first time period is earlier than a start moment of the another time period.

2. A quantity of first time periods in which no data is detected in a plurality of first time periods is greater than a quantity of first time periods in which data is detected in the plurality of first time periods. For example, it is assumed that there are 10 first time periods in total, no data from the terminal device is detected in eight first time periods, and data from the terminal device is detected in two first time periods. In this case, it may be considered that no data from the terminal device is detected in the first time period.

Optionally, the manner 2 may also be understood as: A ratio of the quantity of first time periods in which no data is detected in the plurality of first time periods to the quantity of first time periods in which data is detected in the plurality of first time periods is greater than or equal to a first ratio, or a ratio of the quantity of first time periods in which no data is detected in the plurality of first time periods to a total quantity of first time periods is greater than or equal to a second ratio. Certainly, there may be another description manner, which is not limited herein.

Optionally, the first ratio may be a predefined or preconfigured value. For example, the first ratio is indicated by the DU to the first node. The second ratio may be a predefined or preconfigured value. For example, the second ratio is indicated by the DU to the first node. Values of the first ratio and the second ratio are not limited in this application.

502: The DU receives first indication information. The first indication information indicates that the first node is in an idle state.

Correspondingly, the first node sends the first indication information.

Optionally, step 502 may include: The DU receives the first indication information from the first node. In other words, the first node sends the first indication information to the DU.

It should be noted that indication information (for example, the first indication information) mentioned in this application may be understood as a management plane data packet. In other words, it is assumed that there is another node between a destination node and a source node, and the another node is configured to transparently transmit the management plane data packet. The destination node herein is a destination node that receives the management plane data packet. The source node is a source node that generates the management plane data packet. For example, the destination node may be the DU, the source node may be the first node, and the another node may be a second node. In other words, a transmission path of the first indication information is from the first node to the second node and to the DU. The second node forwards the first indication information.

Optionally, that the first indication information indicates that the first node is in the idle state may also be understood as: The first indication information indicates that the first node has no uplink data to report.

Optionally, the first indication information may include identification information of the first node. The identification information of the first node may be an internet protocol (internet protocol, IP) address. Alternatively, the identification information of the first node may be an IP address and a port number.

503: The DU sends second indication information based on the first indication information, where the second indication information indicates the second node not to wait for a data packet of the first node, and the second node is an upper-level node of the first node.

Correspondingly, the second node receives the second indication information.

Optionally, step 503 may include: The DU sends the second indication information based on topology information and the first indication information. The topology information includes a connection relationship between a plurality of nodes, and the plurality of nodes include the first node and the second node. It should be noted that the connection relationship between the nodes mentioned in this embodiment of this application includes a direct connection and/or an indirect connection. The "connection" is not limited a physical connection or a logical connection between nodes. Communication is directly established between two directly connected nodes, while communication between two indirectly connected nodes needs to depend on forwarding by another node, and is indirect communication.

Optionally, the first indication information may include the identification information of the first node. In this case, that the DU sends the second indication information based on the topology information and the first indication information may be understood as: The DU may determine, based on the topology information and the identification information of the first node, the second node that is an upper-level node of the first node, and send the second indication information to the second node. In other words, the second node may receive the second indication information from the DU.

504: The second node sends a first data packet at a first moment. The first moment is earlier than a maximum moment till which the second node waits for arrival of the data packet of the first node.

Correspondingly, a third node receives the first data packet. In a possible implementation, the third node is an upper-level node of the second node. For example, the third node is an RU, the second node is an RU, and the first node is an RU; the third node is an FHM, the second node is an RU, and the first node is an RU; or the third node is an FHM, the second node is an FHM, and the first node is an RU. In this case, the third node may decapsulate the first data packet, encapsulate decapsulated data together with data generated by the third node, and finally deliver the encapsulated data to an RU at an even higher level, an FHM, or a DU. In another possible implementation, the third node is a DU, the second node is an RU, and the first node is an RU; the third node is a DU, the second node is an FHM, and the first node is an RU; or the third node is a DU, the second node is an FHM, and the first node is an FHM. In this case, the third node may decapsulate the first data packet.

The foregoing merely provides some examples of the third node, the second node, and the first node, and there is another combination manner. This is not limited herein.

Optionally, step 504 may include: The second node sends the first data packet to the third node at the first moment. In other words, the third node receives the first data packet from the second node.

Optionally, that the first moment is earlier than the maximum moment till which the second node waits for arrival of the data packet of the first node may also be described as: The first moment is earlier than an end moment of maximum waiting time of the second node. The maximum waiting time of the second node is maximum time in which the second node waits for arrival of the data packet of the first node. A description manner is not limited in this application.

It can be learned that, in the foregoing embodiment, the first node may send the first indication information when there is no to-be-sent uplink data, so that the DU may learn, based on the first indication information, that the first node is in the idle state, and may further send the second indication information to the upper-level node of the first node, for example, the second node, and the second node may learn not to wait for the data packet of the first node. In this way, the second node may send the first data packet to a node at an even higher level in time without waiting for arrival of the data packet of the first node. In this way, a transmission delay can be reduced, thereby increasing time for the DU to process data, and further improving communication performance in all areas covered by a network device.

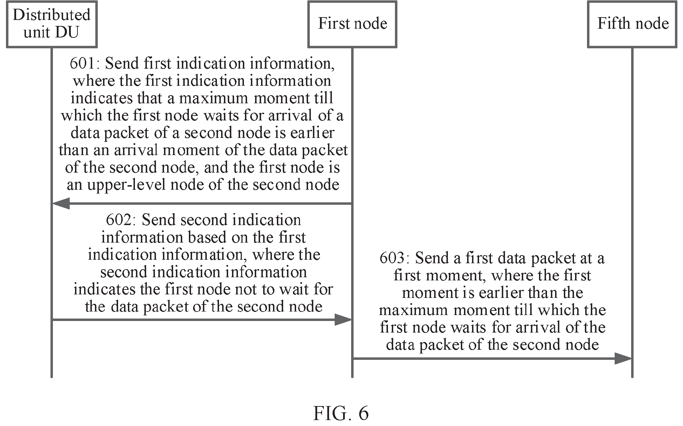

FIG. 6 shows still another communication method according to an embodiment of this application. The communication method includes but is not limited to the following steps:

601: A first node sends first indication information. The first indication information indicates that a maximum moment till which the first node waits for arrival of a data packet of a second node is earlier than an arrival moment of the data packet of the second node, and the first node is an upper-level node of the second node.

Correspondingly, a DU receives the first indication information.

Optionally, step 601 may include: The first node sends the first indication information to the DU. In other words, the DU receives the first indication information from the first node.

Optionally, the first indication information may include identification information of the first node. The identification information of the first node may be an IP address. Alternatively, the identification information of the first node may be an IP address and a port number.

Optionally, before step 601, the first node may further count, in a first time period, a quantity of times that a data packet of the second node is obtained and/or a quantity of times that no data packet of the second node is obtained before the maximum moment till which the first node waits for arrival of the data packet of the second node. In this case, the first node may determine, based on the quantity of times that the data packet of the second node is obtained and/or the quantity of times that no data packet of the second node is obtained, that the maximum moment till which the first node waits for arrival of the data packet of the second node is earlier than the arrival moment of the data packet of the second node. For example, if the quantity of times that the data packet of the second node is obtained is less than or equal to a first quantity of times, it may be considered that the maximum moment till which the first node waits for arrival of the data packet of the second node is earlier than the arrival moment of the data packet of the second node. Alternatively, if the quantity of times that no data packet of the second node is obtained is greater than or equal to a second quantity of times, it may be considered that the maximum moment till which the first node waits for arrival of the data packet of the second node is earlier than the arrival moment of the data packet of the second node. Alternatively, if a ratio of the quantity of times that the data packet of the second node is obtained to the quantity of times that no data packet of the second node is obtained is greater than or equal to a first ratio, it may be considered that the maximum moment till which the first node waits for arrival of the data packet of the second node is earlier than the arrival moment of the data packet of the second node. Alternatively, if the quantity of times that the data packet of the second node is obtained is less than the quantity of times that no data packet of the second node is obtained, it may be considered that the maximum moment till which the first node waits for arrival of the data packet of the second node is earlier than the arrival moment of the data packet of the second node. These are merely some examples of manners, and there are other implementations, which are not listed one by one herein.

Optionally, the first time period is a predefined or (pre)configured time period. For example, the first time period is indicated by the DU to the first node. Optionally, duration of the first time period may be greater than 0. For example, the first time period may include at least one piece of maximum waiting time, and the maximum waiting time is maximum time in which the first node waits for arrival of the data packet of the second node. The duration of the first time period is not limited in this application.

Optionally, the first quantity of times may be a predefined or preconfigured value. For example, the first quantity of times is indicated by the DU to the first node. The second quantity of times may be a predefined or preconfigured value. For example, the second quantity of times is indicated by the DU to the first node. Values of the first quantity of times and the second quantity of times are not limited in this application.

602: The DU sends second indication information based on the first indication information. The second indication information indicates the first node not to wait for the data packet of the second node.

Correspondingly, the first node receives the second indication information.

Optionally, the DU may further receive fifth indication information. For example, the DU receives the fifth indication information from a third node. The fifth indication information indicates that a maximum moment till which the third node waits for arrival of a data packet of a fourth node is earlier than an arrival moment of the data packet of the fourth node, and the third node is an upper-level node of the fourth node. Optionally, the fifth indication information may include identification information of the third node. The identification information of the third node may be an IP address. Alternatively, the identification information of the third node may be an IP address and a port number. In this case, step 602 may include: The DU sends the second indication information based on topology information, the first indication information, and the fifth indication information. The topology information indicates a connection relationship between a plurality of nodes, and the plurality of nodes include the first node, the second node, the third node, and the fourth node.

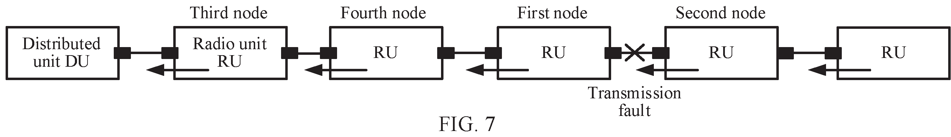

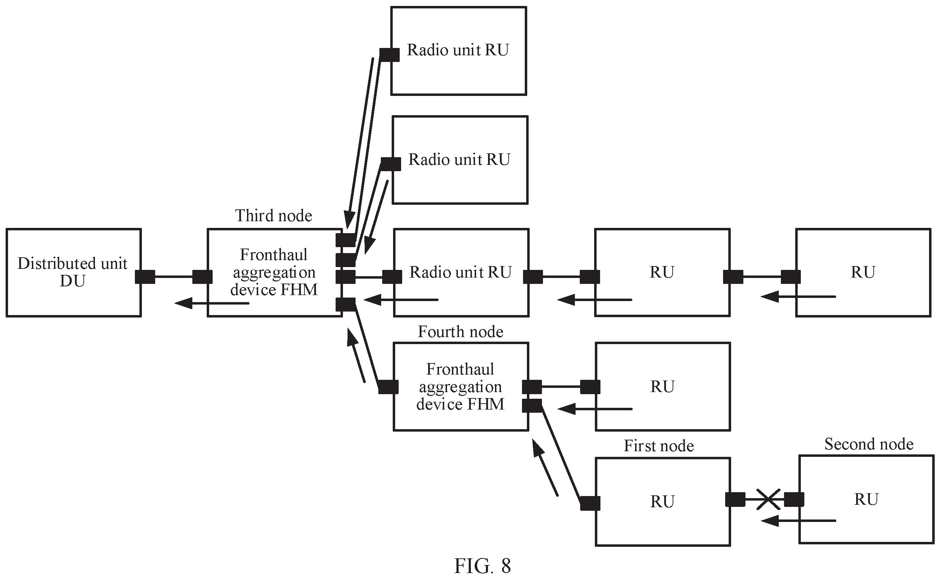

The following describes a process in which "the DU sends the second indication information" with reference to a specific example. For example, as shown in FIG. 7 or FIG. 8, the DU may learn, based on the first indication information, that the maximum moment till which the first node waits for arrival of the data packet of the second node is earlier than the arrival moment of the data packet of the second node. In addition, the DU may learn, based on the fifth indication information, that the maximum moment till which the third node waits for arrival of the data packet of the fourth node is earlier than the arrival moment of the data packet of the fourth node. Therefore, the DU determines, based on the topology information, the first indication information, and the fifth indication information, that the first node, the second node, the third node, and the fourth node are located on a same link, and a lowest-level node that has a transmission fault on the link is the second node. Therefore, the DU sends the second indication information to an upper-level node of the second node, that is, the first node. In other words, because the second node does not send a data packet till a latest moment at which the second node reports a data packet, the first node cannot obtain the data packet of the second node before the maximum moment till which the first node waits for arrival of the data packet of the second node. In this case, it is very likely that the first node does not send a data packet till a latest moment at which the first node reports a data packet, and consequently, the fourth node does not send a data packet till a latest moment at which the fourth node reports a data packet. As a result, the third node cannot obtain the data packet of the fourth node before the maximum moment till which the third node waits for arrival of the data packet of the fourth node. Therefore, if the first node is indicated not to wait for the data packet of the second node, the first node may send a data packet to the fourth node in time, and the fourth node may send a data packet to the third node in time. In this way, a transmission delay can be reduced, thereby increasing time for the DU to process data, and further improving communication performance in all areas covered by a network device.

It should be noted that, for a manner in which the third node determines that the maximum moment till which the third node waits for arrival of the data packet of the fourth node is earlier than the arrival moment of the data packet of the fourth node, refer to the foregoing process in which the first node determines that the maximum moment till which the first node waits for arrival of the data packet of the second node is earlier than the arrival moment of the data packet of the second node. Details are not described herein again.

603: The first node sends a first data packet at a first moment. The first moment is earlier than the maximum moment till which the first node waits for arrival of the data packet of the second node.

Correspondingly, a fifth node receives the first data packet. In a possible implementation, the fifth node is an upper-level node of the first node. Optionally, the fifth node and the fourth node may be a same node or different nodes.

Optionally, step 603 may include: The first node sends the first data packet to the fifth node at the first moment. In other words, the fifth node receives the first data packet from the first node.

Optionally, that the first moment is earlier than the maximum moment till which the first node waits for arrival of the data packet of the second node may also be described as: The first moment is earlier than an end moment of maximum waiting time of the first node. The maximum waiting time of the first node is maximum time in which the first node waits for arrival of the data packet of the second node. A description manner is not limited in this application.

It can be learned that in the foregoing embodiment, the first node may send the first indication information, so that the DU learns, based on the first indication information, that the maximum moment till which the first node waits for arrival of the data packet of the second node is earlier than the arrival moment of the data packet of the second node, and sends the second indication information based on the first indication information, so that the first node learns, based on the second indication information, not to wait for the data packet of the second node. Therefore, the first node may send a data packet to a node at an even higher level in time. In this way, a transmission delay can be reduced, thereby increasing time for the DU to process data, and further improving communication performance in all areas covered by the network device.

Optionally, in the embodiment shown in FIG. 6, the method may further include: The DU receives third indication information, where the third indication information indicates that the maximum moment till which the first node waits for arrival of the data packet of the second node is later than the arrival moment of the data packet of the second node. The DU sends fourth indication information based on the third indication information, where the fourth indication information indicates the first node to wait for the data packet of the second node. In other words, when the first node learns that the maximum moment till which the first node waits for arrival of the data packet of the second node is later than the arrival moment of the data packet of the second node, the first node may wait for the data packet of the second node again, thereby reducing a data loss, and improving transmission reliability.

That the DU receives the third indication information may include: The DU receives the third indication information from the first node. In other words, the first node sends the third indication information to the DU. Optionally, the third indication information may include identification information of the first node.

Optionally, that the DU sends the fourth indication information based on the third indication information may include: The DU sends the fourth indication information based on topology information and the third indication information, for example, sends the fourth indication information to the first node. In other words, the first node receives the fourth indication information from the DU.

Optionally, in the embodiment shown in FIG. 6, the method may further include: The DU sends sixth indication information. For example, the DU sends the sixth indication information to a network management device. The sixth indication information indicates that there is an exception in data transmission of the second node, or the sixth indication information indicates that there is an exception in data transmission in an area covered by a first cell. The area covered by the first cell includes an area covered by the second node.

It should be noted that the embodiment shown in FIG. 6 is an example of an implementation. In RU aggregation networking, there may be a problem where a transmission fault occurs at nodes (such as RUs or FHMs) on different links. The problem may still be resolved by using a manner similar to that shown in FIG. 6, and a specific process is not described herein again.

It may be understood that, to implement the foregoing functions, the foregoing device includes corresponding hardware structures and/or software modules for performing each function. A person skilled in the art should easily be aware that, in combination with units and algorithm steps of the examples described in embodiments disclosed in this specification, this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application. In embodiments of this application, the node (for example, the first node or the second node) or the DU may be divided into functional modules based on the foregoing method examples. For example, each functional module may be obtained through division based on each function, or two or more functions may be integrated into one processing module. The foregoing integrated module may be implemented in a form of hardware, or may be implemented in a form of a software functional module. It should be noted that, in embodiments of this application, module division is an example, and is merely logical function division. During actual implementation, another division manner may be used.

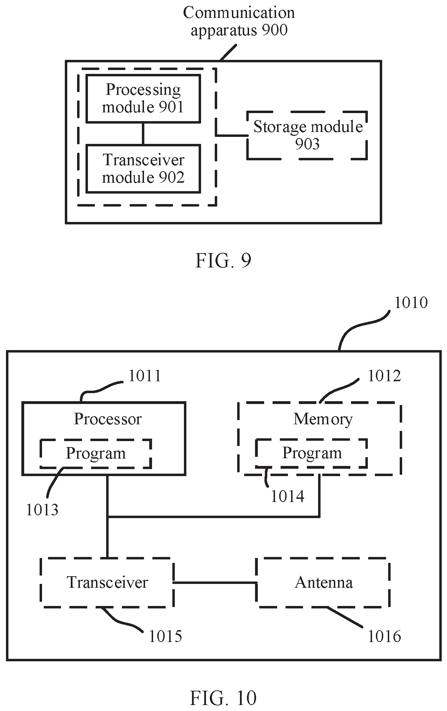

FIG. 9 is a diagram of a structure of a communication apparatus according to an embodiment of this application. The communication apparatus 900 may be used in the method shown in any one of the embodiments in FIG. 4 to FIG. 6. As shown in FIG. 9, the communication apparatus 900 includes a processing module 901 and a transceiver module 902. The processing module 901 may be one or more processors, and the transceiver module 902 may be a transceiver or a communication interface. The communication apparatus may be configured to implement functions of a node (for example, the first node or the second node) or a DU in any one of the foregoing method embodiments, or configured to implement functions of the network element in any one of the foregoing method embodiments. The network element or network function may be a network element in a hardware device, a software function running on dedicated hardware, or an instantiated virtualization function on a platform (for example, a cloud platform). Optionally, the communication apparatus 900 may further include a storage module 903, configured to store program code and data of the communication apparatus 900.

In an example, when the communication apparatus is used as the node (for example, the first node or the second node) or a chip used in the node (for example, the first node or the second node), and performs steps performed by the node (for example, the first node or the second node) in the foregoing method embodiments. The transceiver module 902 is configured to specifically perform a sending action and/or a receiving action performed by the node (for example, the first node or the second node) in any embodiment in FIG. 4 to FIG. 6, for example, support the node (for example, the first node or the second node) in performing another process of the technology described in this specification. The processing module 901 may be configured to support the communication apparatus 900 in performing a processing action in the foregoing method embodiments, for example, support the node (for example, the first node or the second node) in performing another process of the technology described in this specification.

For example, the processing module 901 is configured to generate a first data packet when no data is received from a terminal device in a first time period, where the first data packet is a null data packet, and an end moment of the first time period is earlier than a latest moment at which the first node reports an uplink data packet. The transceiver module 902 is configured to send the first data packet.

For another example, the transceiver module 902 is configured to: receive a first data packet at a first moment, where the first moment is earlier than a maximum moment till which a second node waits for arrival of a data packet of a first node, the first data packet is a null data packet, and the second node is an upper-level node of the first node; and send a second data packet at a second moment, where the second moment is later than the first moment, and the second moment is earlier than the maximum moment till which the second node waits for arrival of the data packet of the first node.

For example, the processing module 901 is configured to determine that there is no to-be-sent uplink data. The transceiver module 902 is configured to send first indication information, where the first indication information indicates that a first node is in an idle state, the first indication information is used to determine second indication information, the second indication information indicates that a second node not to wait for a data packet of the first node, and the first node is a lower-level node of the second node.

For another example, the transceiver module 902 is configured to: receive second indication information, where the second indication information indicates the second node not to wait for a data packet of a first node, and the second node is an upper-level node of the first node; and send the first data packet at a first moment, where the first moment is earlier than a maximum moment till which the second node waits for arrival of the data packet of the first node.

For another example, the transceiver module 902 is configured to: send first indication information, where the first indication information indicates that a maximum moment till which the first node waits for arrival of a data packet of a second node is earlier than an arrival moment of the data packet of the second node, the first node is an upper-level node of the second node, the first indication information is used to determine second indication information, and the second indication information indicates the first node not to wait for the data packet of the second node; receive the second indication information; and send a first data packet at a first moment, where the first moment is earlier than the maximum moment till which the first node waits for arrival of the data packet of the second node.

Optionally, the transceiver module 902 is further configured to: send third indication information, where the third indication information indicates that the maximum moment till which the first node waits for arrival of the data packet of the second node is later than the arrival moment of the data packet of the second node, the third indication information is used to determine fourth indication information, and the fourth indication information indicates the first node to wait for the data packet of the second node; and receive the fourth indication information.

In another example, when the communication apparatus is used as a DU or a chip used in a DU, and performs steps performed by the DU in the foregoing method embodiments, the transceiver module 902 is configured to specifically perform a sending action and/or a receiving action performed by the DU in any embodiment in FIG. 4 to FIG. 6, for example, support the DU in performing another process of the technology described in this specification. The processing module 901 may be configured to support the communication apparatus 900 in performing a processing action in the foregoing method embodiments, for example, support the DU in performing another process of the technology described in this specification.

For example, the transceiver module 902 is configured to: receive first indication information, where the first indication information indicates that a first node is in an idle state; and send second indication information based on the first indication information, where the second indication information indicates a second node not to wait for a data packet of the first node, and the second node is an upper-level node of the first node.

Optionally, when the second indication information is sent based on the first indication information, the transceiver module 902 is configured to send the second indication information based on topology information and the first indication information, where the topology information includes a connection relationship between a plurality of nodes, and the plurality of nodes include the first node and the second node.

For another example, the transceiver module 902 is configured to: receive first indication information, where the first indication information indicates that a maximum moment till which a first node waits for arrival of a data packet of a second node is earlier than an arrival moment of the data packet of the second node, and the first node is an upper-level node of the second node; and send second indication information based on the first indication information, where the second indication information indicates the first node not to wait for the data packet of the second node.

Optionally, the transceiver module 902 is further configured to receive fifth indication information, where the fifth indication information indicates that a maximum moment till which a third node waits for arrival of a data packet of a fourth node is earlier than an arrival moment of the data packet of the fourth node, and the third node is an upper-level node of the fourth node. When the second indication information is sent based on the first indication information, the transceiver module 902 is configured to send the second indication information based on topology information, the first indication information, and the fifth indication information, where the topology information indicates a connection relationship between a plurality of nodes, and the plurality of nodes include the first node, the second node, the third node, and the fourth node.

Optionally, the transceiver module 902 is further configured to: receive third indication information, where the third indication information indicates that the maximum moment till which the first node waits for arrival of the data packet of the second node is later than the arrival moment of the data packet of the second node; and send fourth indication information based on the third indication information, where the fourth indication information indicates the first node to wait for the data packet of the second node.

Optionally, the transceiver module 902 is further configured to send sixth indication information, where the sixth indication information indicates that there is an exception in data transmission of the second node, or the sixth indication information indicates that there is an exception in data transmission in an area covered by a first cell, and the area covered by the first cell includes the area covered by the second node.

In a possible implementation, when the node (for example, the first node or the second node) or the DU is a chip, the transceiver module 902 may be a communication interface, a pin, a circuit, or the like. The communication interface may be configured to input to-be-processed data to a processor, and may output a processing result of the processor to the outside. During specific implementation, the communication interface may be a general purpose input/output (general purpose input/output, GPIO) interface, and may be connected to a plurality of peripheral devices (for example, a display (LCD), a camera (camera), a radio frequency (radio frequency, RF) module, and an antenna). The communication interface is connected to the processor through a bus.

The processing module 901 may be a processor. The processor may execute computer-executable instructions stored in the storage module, so that the chip performs the method in any one of the embodiments in FIG. 4 to FIG. 6. Further, the processor may include a controller, an arithmetic unit, and a register. For example, the controller is mainly responsible for instruction decoding, and transmitting a control signal for an operation corresponding to the instructions. The arithmetic unit is mainly responsible for performing a fixed-point or floating-point arithmetic operation, a shift operation, a logic operation, and the like, and may also perform an address operation and address translation. The register is mainly responsible for saving a quantity of register operations, intermediate operation results, and the like that are temporarily stored during instruction execution. During specific implementation, a hardware architecture of the processor may be an ASIC architecture, a microprocessor without interlocked piped stages architecture (microprocessor without interlocked piped stages architecture, MIPS), an advanced reduced instruction set computing machines (advanced RISC machines, ARM) architecture, a second processor (network processor, NP) architecture, or the like. The processor may be a single-core processor or a multi-core processor. The storage module may be a storage module inside the chip, for example, a register or a cache. Alternatively, the storage module may be a storage module outside the chip, for example, a ROM, another type of static storage device that can store static information and instructions, or a RAM. It should be noted that functions respectively corresponding to the processor and the interface may be implemented by using a hardware design, may be implemented by using a software design, or may be implemented by using a combination of software and hardware. This is not limited herein.

FIG. 10 is a diagram of a structure of another communication apparatus according to an embodiment of this application. It may be understood that the communication apparatus 1010 includes means in necessary forms, such as modules, units, elements, circuits, or interfaces, which are appropriately configured together to implement the solution. The communication apparatus 1010 may be the foregoing node (for example, the first node or the second node) or the DU, or may be a component (for example, a chip) in these devices, to implement the method described in the foregoing method embodiments. The communication apparatus 1010 includes one or more processors 1011. The processor 1011 may be a general-purpose processor, a dedicated processor, or the like. For example, the processor may be a baseband processor or a central processing unit. The baseband processor may be configured to process a communication protocol and communication data. The central processing unit may be configured to: control the communication apparatus (for example, the foregoing node (for example, the first node or the second node), the DU, or the chip), execute a software program, and process data of the software program.

Optionally, in a design, the processor 1011 may include a program 1013 (which may also be sometimes referred to as code or instructions). The program 1013 may be run on the processor 1011, to enable the communication apparatus 1010 to perform the method described in the foregoing embodiments. In still another possible design, the communication apparatus 1010 includes a circuit (which is not shown in FIG. 10), and the circuit is configured to implement functions of the foregoing node (for example, the first node or the second node) or the DU in the foregoing embodiments. Optionally, the communication apparatus 1010 may include one or more memories 1012, and a program 1014 (which may also be sometimes referred to as code or instructions) is stored in the memory 1012. The program 1014 may be run on the processor 1011, to enable the communication apparatus 1010 to perform the method described in the foregoing method embodiments.

Optionally, the processor 1011 and/or the memory 1012 may further store data. The processor and the memory may be separately disposed, or may be integrated together. Optionally, the communication apparatus 1010 may further include a transceiver 1015 and/or an antenna 1016. The processor 1011 may also be sometimes referred to as a processing unit, and controls a communication apparatus (for example, the foregoing node (for example, the first node or the second node) or the DU). The transceiver 1015 may also be sometimes referred to as a transceiver unit, a transceiver machine, a transceiver circuit, a transceiver, or the like, and is configured to implement receiving and sending functions of the communication apparatus through the antenna 1016.

An embodiment of this application further provides a communication apparatus. The communication apparatus includes at least one processor. The at least one processor is configured to perform the method in any one of the embodiments in FIG. 4 to FIG. 6.

An embodiment of this application further provides a computer-readable storage medium. The computer-readable storage medium stores computer instructions. When the computer instructions are executed, a computer is enabled to perform the method in any one of the implementations of the embodiments in FIG. 3, FIG. 7, FIG. 8, and FIG. 9.

An embodiment of this application further provides a computer program product. The computer program product includes computer program code. When the computer program code is run on a computer, the computer is enabled to perform the method in any one of the implementations of the embodiments in FIG. 3, FIG. 7, FIG. 8, and FIG. 9.

An embodiment of this application further provides a chip. The chip includes at least one processor and an interface. The processor is configured to read and execute instructions stored in a memory. When the instructions are run, the chip is enabled to perform the method in any one of the implementations of the embodiments in FIG. 3, FIG. 7, FIG. 8, and FIG. 9.

The foregoing units described as separate parts may or may not be physically separate, and parts displayed as units may or may not be physical units, may be located in one position, or may be distributed on a plurality of network units. Some or all of the units may be selected based on an actual requirement, to achieve the objectives of the solutions in embodiments of this application. In addition, network element units in embodiments of this application may be integrated into one processing unit, each of the units may exist alone physically, or two or more units may be integrated into one unit. The integrated unit may be implemented in a form of hardware, or may be implemented in a form of a software network element unit.

When the integrated unit is implemented in the form of the software network element unit and sold or used as an independent product, the integrated unit may be stored in a computer-readable storage medium. Based on such an understanding, an essentially contributing part in the technical solutions of this application or all or some of the technical solutions may be embodied in a form of a software product. The computer software product is stored in a storage medium and includes several instructions for instructing a computer device (which may be a personal computer, a terminal device, a cloud server, a network device, or the like) to perform all or some of the steps of the method in embodiments of this application. The storage medium includes any medium that can store program code, such as a USB flash drive, a removable hard disk drive, a read-only memory (Read-Only Memory, ROM), a random access memory (Random Access Memory, RAM), a magnetic disk, or an optical disc. The foregoing descriptions are merely specific implementations of this application, but are not intended to limit the protection scope of this application. Any modification or replacement readily figured out by a person skilled in the art within the technical scope disclosed in this application shall fall within the protection scope of this application. Therefore, the protection scope of this application shall be subject to the protection scope of the claims.

## Claims

1. A communication method, applied to a first node, wherein the method comprises:
generating a first data packet when no data is received from a terminal device in a first time period, wherein the first data packet is a null data packet, and an end moment of the first time period is earlier than a latest moment at which the first node reports an uplink data packet; and
sending the first data packet.

2. A communication method, applied to a second node, wherein the method comprises:
receiving a first data packet at a first moment, wherein the first moment is earlier than a maximum moment till which the second node waits for arrival of a data packet of a first node, the first data packet is a null data packet, and the second node is an upper-level node of the first node; and
sending a second data packet at a second moment, wherein the second moment is later than the first moment, and the second moment is earlier than the maximum moment till which the second node waits for arrival of the data packet of the first node.

3. A communication method, applied to a first node, wherein the method comprises:
determining that there is no to-be-sent uplink data; and
sending first indication information, wherein the first indication information indicates that the first node is in an idle state, the first indication information is used to determine second indication information, the second indication information indicates a second node not to wait for a data packet of the first node, and the first node is a lower-level node of the second node.

4. A communication method, applied to a distributed unit DU, wherein the method comprises:
receiving first indication information, wherein the first indication information indicates that a first node is in an idle state; and
sending second indication information based on the first indication information, wherein the second indication information indicates a second node not to wait for a data packet of the first node, and the second node is an upper-level node of the first node.

5. The method according to claim 4, wherein the sending the second indication information based on the first indication information comprises:
sending the second indication information based on topology information and the first indication information, wherein
the topology information comprises a connection relationship between a plurality of nodes, and the plurality of nodes comprise the first node and the second node.

6. A communication method, applied to a second node, wherein the method comprises:
receiving second indication information, wherein the second indication information indicates the second node not to wait for a data packet of a first node, and the second node is an upper-level node of the first node; and
sending a first data packet at a first moment, wherein the first moment is earlier than a maximum moment till which the second node waits for arrival of the data packet of the first node.

7. A communication method, applied to a first node, wherein the method comprises:
sending first indication information, wherein the first indication information indicates that a maximum moment till which the first node waits for arrival of a data packet of a second node is earlier than an arrival moment of the data packet of the second node, the first node is an upper-level node of the second node, the first indication information is used to determine second indication information, and the second indication information indicates the first node not to wait for the data packet of the second node;
receiving the second indication information; and
sending a first data packet at a first moment, wherein the first moment is earlier than the maximum moment till which the first node waits for arrival of the data packet of the second node.

8. The method according to claim 7, wherein the method further comprises:
sending third indication information, wherein the third indication information indicates that the maximum moment till which the first node waits for arrival of the data packet of the second node is later than the arrival moment of the data packet of the second node, the third indication information is used to determine fourth indication information, and the fourth indication information indicates the first node to wait for the data packet of the second node; and
receiving the fourth indication information.

9. A communication method, applied to a distributed unit DU, wherein the method comprises:
receiving first indication information, wherein the first indication information indicates that a maximum moment till which a first node waits for arrival of a data packet of a second node is earlier than an arrival moment of the data packet of the second node, and the first node is an upper-level node of the second node; and
sending second indication information based on the first indication information, wherein the second indication information indicates the first node not to wait for the data packet of the second node.

10. The method according to claim 9, wherein the method further comprises:
receiving fifth indication information, wherein the fifth indication information indicates that a maximum moment till which a third node waits for arrival of a data packet of a fourth node is earlier than an arrival moment of the data packet of the fourth node, and the third node is an upper-level node of the fourth node; and
the sending the second indication information based on the first indication information comprises:
sending the second indication information based on topology information, the first indication information, and the fifth indication information, wherein
the topology information indicates a connection relationship between a plurality of nodes, and the plurality of nodes comprise the first node, the second node, the third node, and the fourth node.

11. The method according to claim 9 or 10, wherein the method further comprises:
receiving third indication information, wherein the third indication information indicates that the maximum moment till which the first node waits for arrival of the data packet of the second node is later than the arrival moment of the data packet of the second node; and
sending fourth indication information based on the third indication information, wherein the fourth indication information indicates the first node to wait for the data packet of the second node.

12. The method according to any one of claims 9 to 11, wherein the method further comprises:
sending sixth indication information, wherein the sixth indication information indicates that there is an exception in data transmission of the second node, or the sixth indication information indicates that there is an exception in data transmission in an area covered by a first cell, and the area covered by the first cell comprises an area covered by the second node.

13. A communication apparatus, comprising a unit or a module configured to implement the method according to any one of claims 1 to 12.

14. A communication apparatus, wherein the communication apparatus comprises at least one processor, and the at least one processor is configured to perform the method according to any one of claims 1 to 12.

15. A computer-readable storage medium, wherein the computer-readable storage medium stores computer instructions, and when the computer instructions are executed, a computer is caused to perform the method according to any one of claims 1 to 12.

16. A computer program product, wherein the computer program product comprises computer program code, and when the computer program code is run on a computer, the computer is caused to perform the method according to any one of claims 1 to 12.

17. A chip, wherein the chip comprises at least one processor and an interface, and the processor is configured to read and execute instructions stored in a memory; and when the instructions are run, the chip is caused to perform the method according to any one of claims 1 to 12.
